# EUROPÄISCHE PATENTSCHRIFT

(11) **EP 2 332 322 B1**
(45) Veröffentlichungstag und Bekanntmachung des Hinweises auf die Patenterteilung: **10.10.2018**
(21) Anmeldenummer: 09781583.1
(22) Anmeldetag: 06.08.2009
(51) Int. Cl.: G06F 3/0488, G06F 3/0482, G06F 3/0481, H04M 1/725

(54) **MOBILTELEFON MIT MENÜFÜHRUNG AUF DEM BILDSCHIRM**
MOBILE TELEPHONE WITH MENU GUIDANCE ON THE SCREEN
TÉLÉPHONE MOBILE AVEC GUIDAGE PAR MENU SUR L'ÉCRAN

(30) Priorität: 13.08.2008 DE 102008038897
(43) Veröffentlichungstag der Anmeldung: 15.06.2011
(73) Patentinhaber: Deutsche Telekom AG, 53113 Bonn (DE)
(72) Erfinder: SEIFERT, Caroline, 53227 Bonn (DE)
(74) Vertreter: Braun-Dullaeus, Karl-Ulrich
(86) Internationale Anmeldenummer: PCT/EP2009/060241
(87) Internationale Veröffentlichungsnummer: WO 2010/018126

(56) Entgegenhaltungen:
- EP-A- 1 098 498
- WO-A-00/17740
- DE-A1- 10 118 765
- GB-A- 2 425 700
- US-A1- 2001 028 369

## Beschreibung

Die Erfindung betrifft ein Endgerät, beispielsweise ein Mobiltelefon, aufweisend einen berührungssensitiven Bildschirm ("Touch Screen") zur Darstellung von Icons umfassend Bedienelemente und/oder Informationsanzeigen. Die Erfindung betrifft zudem ein Verfahren zur Präsentation derartiger Icons.

Seit einiger Zeit werden gerade Mobiltelefone mit Touch Screens immer populärer, und zwar nicht nur, weil sie sich durch ihr minimalistisches Design auszeichnen. Ein besonderer Vorteil ist, dass sie wegen der nahezu beliebig anordnenbaren Funktionstasten und Icons eine Vielfalt von Darstellungs- und Bedienmöglichkeiten bieten, die mit den bislang bekannten mechanischen Tasten nicht zu erreichen sind.

Dabei sind verschiedene Gestaltungen für die Anordnung von Icons bekannt. Als besonders attraktiv haben sich dreidimensional animierte Darstellungen erwiesen, wie sie beispielsweise als "coverflow" bekannt und beispielsweise in der WO 2008/033853 A2 offenbart sind. Bei dieser virtuellen 3D-Umgebung zur Anzeige grafischer Elemente werden die Hüllen ("Cover") von Musikalben virtuell in einer Reihe hintereinander liegend positioniert, wobei der Nutzer in der Menge der Cover wie in einem Katalog blättern und das im Vordergrund befindliche auswählen kann. Ein solches Blättern kann auch durch virtuelles Verschieben oder "Rotieren" einer ringförmigen Anordnung von Icons mit dem Finger geschehen. Die Anzahl der in einer solchen Reihe anordnenbaren Icons ist jedoch begrenzt.

Die Aufgabe der vorliegenden Erfindung liegt nunmehr darin, ein Endgerät insbesondere mit Touch Screen Bildschirm und ein Verfahren zur seiner Bedienung anzugeben, das trotz vorhandener Vielzahl auf dem Bildschirm anzuordnender Icons eine einfache und komfortable Bedienung bei erhöhter Attraktivität ermöglicht.

Diese Aufgaben werden durch das Endgerät mit den Merkmalen des Anspruch 1 und das Verfahren nach Anspruch 13 gelöst. Vorteilhafte Ausführungsformen sind in den jeweiligen Unteransprüchen genannt.

Der wesentliche Grundgedanke der Erfindung liegt in der besonderen Art der Menüführung, bei der die Icons auf einer virtuellen Kugeloberfläche angeordnet sind, die im Gegensatz zu der bislang bekannten Bewegungsmöglichkeit in den zwei Freiheitsgraden links und rechts noch weitere Freiheitsgrade bietet. Dementsprechend ist erfindungsgemäß ein Darstellungsmodus vorgesehen, bei dem eine Anzahl von Icons aus einem Satz von auf dem Endgerät zur Verfügung stehenden Icons auf einem dreidimensional dargestellten und nach außen gewölbten Teil der virtuellen Kugel angeordnet sind. Dabei erscheint der Teil der Kugel vorteilhafterweise nicht als Kugelausschnitt sondern als Kugelabschnitt, insbesondere als Halbkugel. Die auf der Kugeloberfläche aktuell sichtbaren Icons sind eine Untermenge von sämtlichen Icons, die - zumindest in Bezug zu einem gewissen Zusammenhang - auf dem Endgerät zur Verfügung stehen. Neben den sichtbaren Icons gibt es somit auch noch unsichtbare Icons, die durch "Drehen" der virtuellen Kugel auf die sichtbare Oberfläche geholt werden können.

Um die Wahrnehmbarkeit in allen Orientierungen des Endgerätes, insbesondere in Portrait oder Landscape, zu gewährleisten, ist die Kugel um eine senkrecht auf dem Bildschirm stehende Drehachse drehbar. Entsprechend der Drehung der Kugel dreht sich die Darstellung der Icons entsprechend auch um den gedrehten Winkel. Die Drehung erfolgt aufgrund des Ausgangsignals eines Bewegungsschalters automatisch. Erfindungsgemäß ist die Kugel auf einem Touch Screen Bildschirm dargestellt und durch eine Berührung, insbesondere durch ein Überstreichen, in Drehung zu versetzen. Die Berührung verursacht somit eine als Drehung der Kugel wahrgenommene Veränderung der Icons. Um den kugeligen Eindruck hervorzurufen, ist die Darstellung der Icons entsprechend der Lage auf der Kugeloberfläche verzerrt.

Es wird an dieser Stelle darauf hingewiesen, dass, wenn nachfolgend im Zusammenhang mit der Darstellung von Icons die Rede von "der Kugel" und der "Bewegung der Kugel" ist, dass dann immer die virtuelle Kugel, respektive der Teil der Kugel, und deren grafisch animierte Bewegung in drei Dimensionen auf dem Bildschirm gemeint ist.

Besonders instruktiv ist es, wenn sich der Kugelabschnitt dem Betrachter zumindest nahezu als eine komplette aus dem Bildschirm "herausspringende" Halbkugel darstellt. Dabei meint "nahezu komplett", dass auf die hinterste Kugelschicht verzichtet werden kann, soweit auf dieser eine vernünftige Darstellung der Icons nicht mehr möglich ist. Vorteilhafterweise ist die wahrnehmbare Größe des Kugelabschnittes veränderlich, so dass die Kugel einen mehr oder weniger großen Teil des Bildschirmes ausfüllt. Dazu kann entweder der Durchmesser der Kugel oder bei bleibendem Durchmesser der Kugelabschnitt vergrößert werden. Beide Effekte können sich auch überlagern.

Zudem ist es vorteilhaft, die Icons nicht wahllos sind auf der Kugeloberfläche zu verteilen, sondern sie in einem auf der Kugeloberfläche dargestellten gleichförmigen Raster anzuordnen. Um die auf der Oberfläche dargestellten Icons optisch voneinander zu trennen, ist es auch vorteilhaft, wenn das Raster deutlich sichtbare und gegebenenfalls eingefärbte Gitterlinien aufweist, die ein wahrnehmbares Netz zwischen den einzelnen Icons aufspannen. Eine solche Trennung kann gegebenenfalls auch dazu beitragen, die Gefahr der Fehlbedienung durch Berühren des benachbarten falschen Icons zu reduzieren. Diese erfindungsgemäße Kugeldarstellung in der Art des sich über dem Bildschirm "erhebenden" Globus mit sichtbaren Koordinaten lädt den Nutzer ganz besonders zum drehenden "Anstoßen" ein.

Um die Bedienung zu vereinfachen kann es gerade im Fall besonders kleiner Icons vorteilhaft sein, wenn nur eines oder wenige im Vordergrund dargestellte Icons, insbesondere das zentral auf den Nutzer gerichtete Icon aktiv geschaltet, also für eine Eingabe durch Berührung sensibel ist. Eine Berührung löst dann die entsprechend dem Icon zugeordnete Aktion aus oder ruft insbesondere die dem Icon zugeordnete Funktion auf. Nutzer mit breiten Fingern laufen dann keine Gefahr, sich bei der Eingabe zu vertippen. Ganz besonders vorteilhaft ist es, wenn das aktive Icon optisch hervorspringt, also sich optisch in Richtung Nutzer um ein Stück von der Kugeloberfläche abhebt. Beim Hervorspringen vergrößert sich das Icon und damit die aktive Schaltfläche.

In einer vorteilhaften Ausführungsform ist die Kugel durch Überstreichen mit insbesondere dem Finger in allen Richtungen aber speziell entlang der Hauptachsen, also entlang der Vertikalen, entlang der Horizontalen und entlang den Diagonalen, drehbar ist, wobei die Drehachse jeweils in der Ebene des Bildschirms liegt. Auf diese Weise erhält der Nutzer einen komfortablen Zugang zu allen vorhandenen Icosns. Dabei kann das Überstreichen ein gewisses Nachlaufen der Drehung verursachen, das dann beispielsweise durch ein bremsendes Antippen gestoppt werden kann.

Bezüglich der Anordnung der Icons auf der Kugeloberfläche gibt es, da es sich um eine virtuelle Kugel handelt, verschiedene Möglichkeiten. Zum einen kann die virtuelle Oberfläche der Kugel gleich der Oberfläche einer realen Kugel mit einer Vielzahl von Icons belegt sein. Dann bringt ein Drehen der virtuellen Kugel die zunächst auf der virtuellen Rückseite platzierten Icons in den Vordergrund. Eine solche Organisation der Icons ist besonders benutzerfreundlich, da der Nutzer mit etwas Übung weiß, wo er welches Icon findet. Er verirrt sich also nicht in der Menge der Icons. Allerdings ist die Zahl der auf die Kugeloberfläche aufbringbaren Icons begrenzt.

Eine andere Art der Organisation liegt darin, die Vielzahl von Icons in einer virtuellen Matrix, einer Art zweidimensionalem "Iconteppich", anzuordnen. Dieser Iconteppich wird virtuell quasi über die Kugel gelegt. Beim Drehen der Kugel wird der Teppich und damit die Icons entsprechend der Drehrichtung gewissermaßen über die Oberfläche der Kugel gezogen. Diese Art der Organisation lässt im Prinzip eine beliebig große Anzahl von Icons zu und gewährleistet, dass der Nutzer sich dennoch in der Anordnung orientieren kann. Mit etwas Übung weiß er, wo die einzelnen Icons liegen.

Auch bezüglich der Anordnung der Kugel auf dem Bildschirm gibt es verschiedene vorteilhafte Alternativen. Zum einen kann der Kugelabschnitt als zentrales Element auf dem Bildschirm angeordnet sein. Eine andere Möglichkeit ist es, für die Kugel einen extra Bereich vorzusehen, so dass auf dem Bildschirm ein weiterer Bereich zur Darstellung anderer von Information vorhanden ist. Hier kann auch ein Taster mit Pfeiltasten angeordnet sein, durch dessen Betätigung die Kugel in möglichst beliebiger Richtung drehbar ist. In einer anderen Ausführungsform können sogar mehrere Kugelabschnitte als Zugang zu verschiedenen Sätzen von Icons auf dem Bildschirm angeordnet sein.

In einer weiteren vorteilhaften Ausführungsform ist die Position des Kugelabschnittes auf dem Bildschirm veränderlich. Der Nutzer kann sich also seine "Menükugel" dorthin verschieben, wo er es am geeignetsten erachtet. Die Verschiebung kann dabei besonders intuitiv durch eine sich von der Seite annährende Bewegung mit anschließender Berührung des Kugelabschnittes in die Richtung der gewünschten Bewegung geschehen.

Nachfolgend wird die Erfindung anhand der Figuren 1 bis 3 näher erklärt. Es zeigen
- **Figur 1**: ein Bildschirm mit zentral angeordneter Kugel,
- **Figur 2:**: ein "Teppich" von Icons und
- **Figur 3:**: mögliche Drehrichtungen der Kugel.

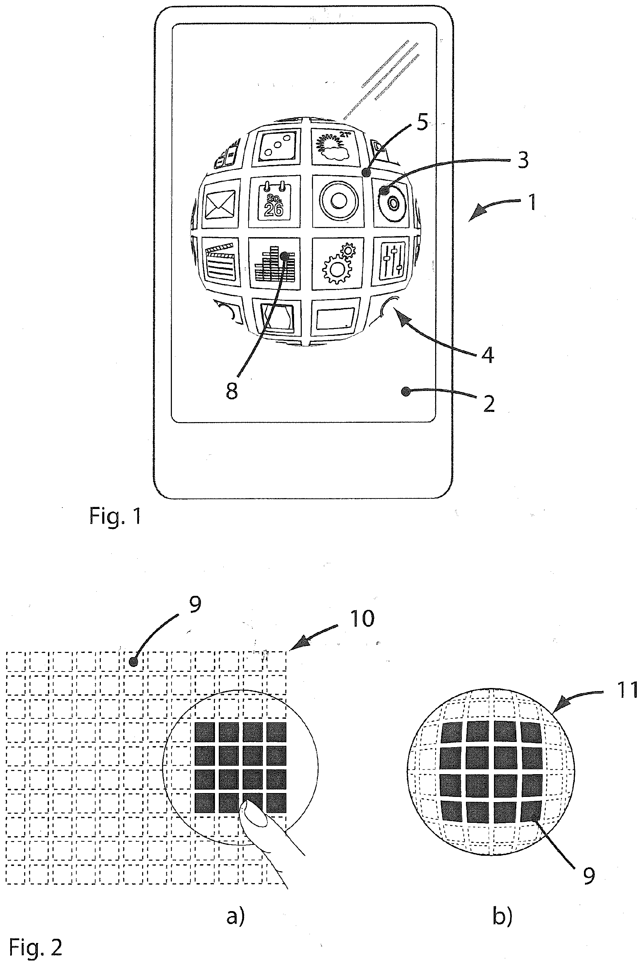

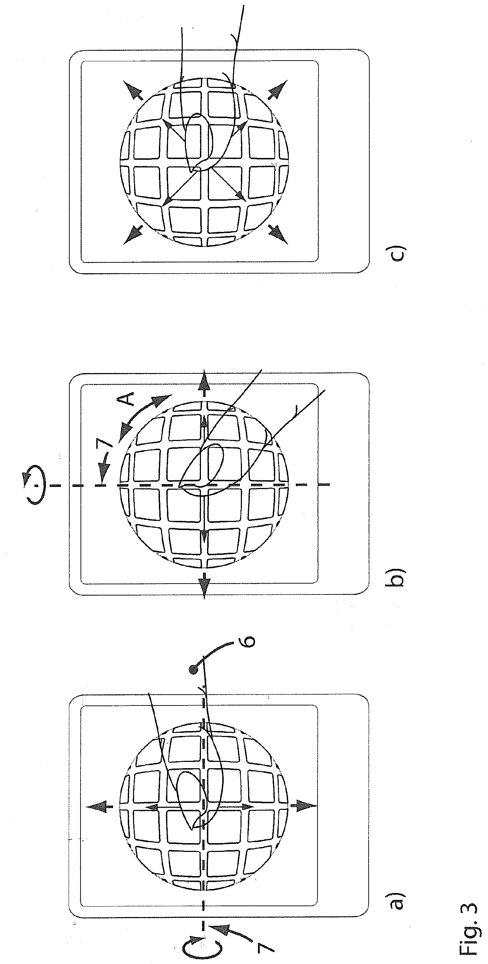

Figur 1 zeigt ein Mobiltelefon 1 mit einem Toch Screen Bildschirm 2, auf dem ein Satz von Icons 3 umfassend Bedienelemente und/oder Informationsanzeigen dargestellt ist. In diesem erfindungsgemäßen Darstellungsmodus ist der Satz von Icons 3 auf einem dreidimensional dargestellten nach außen Abschnitt einer virtuellen Kugel 4, der nahezu eine Halbkugel ausbildet, angeordnet, wobei die Halbkugel als zentrales Element auf dem Bildschirm 2 angeordnet ist. Diese Kugel 4 kann durch eine manuelle Eingabe, hier durch Überstreichen mit dem Finger (Figur 3) in "Drehung" versetzt werden, wobei sich der Eindruck der Drehung aus der wahrgenommenen Veränderung der Icons ergibt, da die Darstellung der Icons 3 entsprechend der Lage auf der sich bewegenden Kugeloberfläche verzerrt ist.

Die Icons 3 sind in einem auf der Kugeloberfläche dargestellten gleichförmigen Raster angeordnet, das zur optischen Trennung der einzelnen Icons deutlich sichtbare Gitterlinien 5 aufweist.

Wie die Figuren 3 anhand der Pfeile zeigen, lässt sich die Kugel 4 durch Überstreichen mit dem Finger 6 in allen Richtungen, insbesondere entlang der Horizontalen (Figur 3a), entlang der Vertikalen (Figur 3b) und entlang den Diagonalen (Figur 3c) drehen, wobei die Drehachse 7 jeweils in der Ebene des Bildschirms liegt. Zudem ist die Kugel 4 um eine senkrecht auf den Bildschirm 2 stehende Drehachse drehbar (Pfeil A), wobei die Darstellung der Icons sich entsprechend dem gedrehten Winkel ebenfalls dreht.

Das im Vordergrund dargestellte "Lautsprecher"-Icon 8 (Figur 1) ist insofern aktiv geschaltet, als eine Berührung eine entsprechende Aktion, hier den Abruf eines Musik Spielers, auslöst.

Im Falle der Kugel 4 nach Figur 1 ist deren virtuelle Oberfläche derart mit den Icons 3 belegt, dass ein Drehen der Kugel 4 die zunächst auf der virtuellen Rückseite der Kugel platzierten Icons in den Vordergrund bringt. Die virtuelle Kugeloberfläche ist somit homogen mit Icons belegt. Dabei ist es natürlich so, dass bei einer Drehung um die Horizontale die "hinten" liegenden Icons nicht auf dem Kopf stehen, wenn sie in den Vordergrund gelangen. Statt dessen wird die als richtig empfundene Orientierung entsprechend berechnet.

Figur 2 zeigt, wie die Vielzahl von Icons 9 in einer virtuellen Matrix 10 angeordnet sein können, wobei beim Drehen der Kugel 11 die Icons 9 quasi entsprechend der Drehrichtung über die Oberfläche der Kugel 11 gezogen werden. Dabei werden die Icons 9 entsprechend Figur 2b auch perspektivisch verzerrt. Insofern stellt Figur 2a nur die Schematik dar.

## Patentansprüche

1. Endgerät, insbesondere Mobiltelefon (1), aufweisend einen berührungssensitiven Bildschirm (2) zur Darstellung von Icons (3) umfassend Bedienelemente und/oder Informationsanzeigen,
und einen Darstellungsmodus, bei dem Icons (3) aus einem Satz von Icons auf einem dreidimensional dargestellten, nach außen gewölbten Teil einer virtuellen Kugel (4) angeordnet sind, wobei eine Berührung des Teiles der Kugel (4), insbesondere ein Überstreichen, eine als Drehung der Kugel (4) wahrgenommene Veränderung der Icons (3) verursacht, wobei die Darstellung der Icons (3) entsprechend der Lage auf der Kugeloberfläche verzerrt ist, **dadurch gekennzeichnet, dass** das Endgerät einen Bewegungsschalter aufweist und derart ausgestaltet ist, dass die Kugel (4) um eine senkrecht auf dem Bildschirm (2) stehende Drehachse aufgrund eines Ausgangssignals des Bewegungsschalters automatisch drehbar ist, wobei die Darstellung der Icons (3) sich entsprechend dem gedrehten Winkel ebenfalls dreht, um die Wahrnehmbarkeit der Icons (3) in allen Orientierungen des Endgerätes zu gewährleisten.

2. Endgerät nach Anspruch 1,
**dadurch gekennzeichnet,**
**dass** der Teil der Kugel (4) einen Kugelabschnitt, insbesondere eine Halbkugel, darstellt, wobei die Icons (3) in einem auf der Kugeloberfläche dargestellten gleichförmigen Raster angeordnet sind.

3. Endgerät nach Anspruch 1 oder 2,
**dadurch gekennzeichnet,**
**dass** das Raster deutlich sichtbare Gitterlinien (5) aufweist, welche die einzelnen Icons (3) optisch trennen.

4. Endgerät nach einem der vorherigen Ansprüche,
**dadurch gekennzeichnet,**
**dass** die Kugel (4) durch Überstreichen in allen Richtungen, insbesondere entlang der Vertikalen, entlang der Horizontalen und entlang den Diagonalen, drehbar ist, wobei die Drehachse (7) jeweils in der Ebene des Bildschirms liegt.

5. Endgerät nach einem der vorherigen Ansprüche,
**dadurch gekennzeichnet,**
**dass** eines oder mehrere im Vordergrund dargestellte Icons (3) insofern aktiv geschaltet sind, als eine Berührung eine Aktion auslöst, insbesondere die dem Icon zugeordnete Funktion aufruft.

6. Endgerät nach einem der vorherigen Ansprüche,
**dadurch gekennzeichnet,**
**dass** die virtuelle Oberfläche der Kugel (4) mit einer Vielzahl von Icons (3) belegt ist, wobei ein Drehen der Kugel (4) die zunächst auf der virtuellen Rückseite platzierten Icons in den Vordergrund bringt und in geeigneter Positionierung präsentiert.

7. Endgerät nach einem der vorherigen Ansprüche,
**dadurch gekennzeichnet,**
**dass** eine Vielzahl von Icons (9) in einer virtuellen Matrix (10) angeordnet sind, wobei beim Drehen der Kugel (11) quasi entsprechend der Drehrichtung über die Oberfläche der Kugel (11) gezogen werden.

8. Endgerät nach einem der vorherigen Ansprüche,
**dadurch gekennzeichnet,**
**dass** der Kugelabschnitt (4) als zentrales Element auf dem Bildschirm (2) angeordnet ist.

9. Endgerät nach einem der vorherigen Ansprüche,
**dadurch gekennzeichnet,**
**dass** der Kugelabschnitt (4) in einem Bereich des Bildschirms (2) angeordnet ist, wobei auf dem Bildschirm (2) ein weiterer Bereich zur Darstellung von Information vorhanden ist.

10. Endgerät nach einem der vorherigen Ansprüche,
**dadurch gekennzeichnet,**
**dass** die Position des Kugelabschnittes auf dem Bildschirm veränderlich ist, wobei insbesondere eine sich von seitlich annährende Bewegung mit anschließender Berührung den Kugelabschnitt in die Richtung der Bewegung verschiebt.

11. Endgerät nach einem der vorherigen Ansprüche,
**dadurch gekennzeichnet,**
**dass** mehrere Kugelabschnitte auf dem Bildschirm angeordnet sind .

12. Endgerät nach einem der vorherigen Ansprüche,
**dadurch gekennzeichnet,**
**dass** die wahrnehmbare Größe des Kugelabschnittes veränderlich ist.

13. Verfahren zum Bedienen eines Endgerätes nach einem der vorherigen Ansprüche, wobei auf dem berührungssensitiven Bildschirm des Endgerätes Icons umfassend Bedienelemente und/oder Informationsanzeigen angezeigt werden,
wobei Icons aus einem Satz von Icons auf einem dreidimensional dargestellten nach außen gewölbten Abschnitt einer virtuellen Kugel angeordnet werden, wobei
eine Berührung, insbesondere ein Überstreichen, des Abschnittes eine als Drehung der Kugel wahrgenommene Veränderung der Icons verursacht, wobei die Darstellung der Icons entsprechend der Lage auf der Kugeloberfläche verzerrt ist,
**dadurch gekennzeichnet,**
**dass** die Kugel (4) um eine senkrecht auf dem Bildschirm (2) stehende Drehachse aufgrund eines Ausgangssignals des Bewegungsschalters automatisch gedreht wird, und dass sich die Darstellung der Icons (3) entsprechend dem gedrehten Winkel ebenfalls dreht, und dass hierdurch die Wahrnehmbarkeit der Icons (3) in allen Orientierungen des Endgerätes gewährleistet wird.

## Claims

1. A terminal device, particularly a mobile telephone (1), having a touch-sensitive screen (2) for displaying icons (3), comprising control elements and/or information displays, and a display mode in which icons (3) from a set of icons are arranged on a three-dimensionally displayed outwardly curved part of a virtual sphere (4), touching the part of the sphere (4), particularly swiping, causing a change in the icons (3) perceived as a rotation of the sphere (4), the display of the icons (3) being skewed in accordance with the location on the sphere surface,
**characterized**
**in that** the terminal device has a motion sensor and is configured in such a manner that the sphere (4) can be rotated automatically about an axis of rotation standing vertically on the screen (2) on the basis of an output signal of the motion sensor, wherein the display of the icons (3) likewise rotates in accordance with the rotated angle, in order to guarantee the perceptibility of the icons (3) in all orientations of the terminal device.

2. The terminal device according to Claim 1,
**characterized**
**in that** the part of the sphere (4) displays a sphere section, particularly a hemisphere, wherein the icons (3) are arranged in a uniform grid displayed on the sphere surface.

3. The terminal device according to Claim 1 or 2,
**characterized**
**in that** the grid has clearly visible gridlines (5) which optionally separate the individual icons (3).

4. The terminal device according to one of the preceding claims,
**characterized**
**in that** the sphere (4) can be rotated by swiping in all directions, particularly along the vertical, along the horizontal and along the diagonals, wherein the axis of rotation (7) lies in the plane of the screen in each case.

5. The terminal device according to one of the preceding claims,
**characterized**
**in that**, if activated, one or more of the icons (3) displayed in the foreground in particular calls up the function assigned to the icon when a touch triggers an action.

6. The terminal device according to one of the preceding claims,
**characterized**
**in that** the virtual surface of the sphere (4) is populated with a multiplicity of icons (3), wherein a rotation of the sphere (4) brings the icons initially placed on the virtual rear side into the foreground and presents the same with suitable positioning.

7. The terminal device according to one of the preceding claims,
**characterized**
**in that** a multiplicity of icons (9) are arranged in a virtual matrix (10), wherein upon rotation of the sphere (11), the icons are pulled, virtually in accordance with the direction of rotation, over the surface of the sphere (11).

8. The terminal device according to one of the preceding claims,
**characterized**
**in that** the sphere section (4) is arranged as a central element on the screen (2).

9. The terminal device according to one of the preceding claims,
**characterized**
**in that** the sphere section (4) is arranged in a region of the screen (2), wherein a further region for displaying information is present on the screen (2).

10. The terminal device according to one of the preceding claims,
**characterized**
**in that** the position of the sphere section on the screen can be changed, wherein in particular a movement approaching from the side with subsequent touching displaces the sphere section in the direction of the movement.

11. The terminal device according to one of the preceding claims,
**characterized**
**in that** a plurality of sphere sections are arranged on the screen.

12. The terminal device according to one of the preceding claims,
**characterized**
**in that** the perceivable size of the sphere section can be changed.

13. A method for operating a terminal device according to one of the preceding claims, icons comprising control elements and/or information displays being displayed on the touch-sensitive screen of the terminal device, icons from a set of icons being arranged on a three-dimensionally displayed outwardly curved section of a virtual sphere, a touch, particularly a swipe, of the section causing a change in the icons perceived as a rotation of the sphere, and the display of the icons being skewed in accordance with the location on the sphere surface,
**characterized**
**in that** the sphere (4) is rotated automatically about an axis of rotation standing vertically on the screen (2) on the basis of an output signal of the motion sensor, and in that the display of the icons (3) likewise rotates in accordance with the rotated angle, and in that as a consequence, the perceptibility of the icons (3) is guaranteed in all orientations of the terminal device.

## Revendications

1. Terminal, notamment téléphone mobile (1), comportant un écran tactile (2) destiné à représenter des icônes (3), comprenant des éléments de manipulation et/ou des affichages d'informations et un mode de représentation, avec lequel les icônes (3) en un jeu d'icônes sont placées sur une partie en représentation tridimensionnelle, bombée vers l'extérieur d'une sphère virtuelle, sachant qu'un contact, notamment un effleurement de la partie de la sphère (4) provoque une modification des icônes (3) perçue comme une rotation de la sphère (4), la représentation des icônes (3) étant déformée en fonction de la position sur la surface de la sphère, **caractérisé en ce que** le terminal comporte un détecteur de mouvement et est conçu de telle sorte que la sphère (4) soit automatiquement rotative autour d'un axe de rotation debout à la perpendiculaire sur l'écran (2), sur la base d'un signal de sortie du détecteur de mouvement, la représentation des icônes (3) tournant également en fonction de l'angle tourné pour assurer la possibilité de percevoir les icônes (3) dans toutes les orientations du terminal.

2. Terminal selon la revendication 1, **caractérisé en ce que** la partie de la sphère (4) représente un segment de sphère, notamment une demi-sphère, les icônes (3) étant placées dans une trame uniforme, représentée sur la surface de la sphère.

3. Terminal selon la revendication 1 ou 2, **caractérisé en ce que** la trame comporte des lignes de trame (5) nettement visibles, lesquelles séparent visuellement les icônes (3).

4. Terminal selon l'une quelconque des revendications précédentes, **caractérisé en ce que** la sphère (4) est rotative par effleurement dans toutes les directions, notamment le long des lignes verticales, le long des lignes horizontales et le long des lignes diagonales, sachant que l'axe de rotation (7) se situe chaque fois dans le plan de l'écran.

5. Terminal selon l'une quelconque des revendications précédentes, **caractérisé en ce qu'**une ou plusieurs icônes (3) représentée(s) en avant-plan sont commutées en mode actif dans la mesure où un contact déclenche une action, notamment appelle la fonction affectée à l'icône.

6. Terminal selon l'une quelconque des revendications précédentes, **caractérisé en ce que** la surface virtuelle de la sphère (4) est garnie d'une pluralité d'icônes (3), sachant qu'une rotation de la sphère (4) amène à l'avant-plan les icônes d'abord placées sur la face arrière virtuelle et les présente selon un positionnement adapté.

7. Terminal selon l'une quelconque des revendications précédentes, **caractérisé en ce qu'**une pluralité d'icônes (9) sont placées dans une matrice (10) virtuelle, sachant que lors de la rotation de la sphère (11), elles sont tirées par-dessus la surface de la sphère (11), en quasi-correspondance avec la direction de rotation.

8. Terminal selon l'une quelconque des revendications précédentes, **caractérisé en ce que** le segment de sphère (4) est placé comme élément central sur l'écran (2) .

9. Terminal selon l'une quelconque des revendications précédentes, **caractérisé en ce que** le segment de sphère (4) est placé dans une zone de l'écran (2), sachant que sur l'écran (2) est présente une zone supplémentaire pour la représentation d'informations.

10. Terminal selon l'une quelconque des revendications précédentes, **caractérisé en ce que** la position du segment de sphère sur l'écran est modifiable, sachant que notamment un mouvement s'approchant latéralement avec un contact consécutif déplace le segment de sphère dans la direction du mouvement.

11. Terminal selon l'une quelconque des revendications précédentes, **caractérisé en ce que** plusieurs segments de sphère sont placés sur l'écran.

12. Terminal selon l'une quelconque des revendications précédentes, **caractérisé en ce que** la taille perceptible du segment de sphère est modifiable.

13. Procédé, destiné à manipuler un terminal selon l'une quelconque des revendications précédentes, sachant que sur l'écran tactile du terminal comprenant des icônes sont affichés des éléments de manipulation et/ou des affichages d'informations, des icônes en un jeu d'icônes se plaçant sur un segment en représentation tridimensionnelle, bombé vers l'extérieur d'une sphère virtuelle, sachant qu'un contact, notamment un effleurement du segment provoque une modification des icônes perçue comme une rotation la sphère, la représentation des icônes étant déformée en fonction de la position sur la surface de la sphère, **caractérisé en ce que** la sphère (4) se tourne automatiquement autour d'un axe de rotation debout à la verticale sur l'écran (2), sur la base d'un signal de sortie du détecteur de mouvement et **en ce que** la représentation des icônes (3) tourne également, en fonction de l'angle tourné et **en ce que** de ce fait, la possibilité de percevoir les icônes (3) dans toutes les orientations du terminal est assurée.
